# EUROPEAN PATENT APPLICATION

(11) **EP 2 680 489 A1**
(43) Date of publication of application: **01.01.2014**
(21) Application number: 12777271.3
(22) Date of filing: 20.04.2012
(51) Int. Cl.: H04L 12/24, H04L 12/28, H04L 29/06

(54) **EVENT REPORTING METHOD AND CUSTOMER PREMISES EQUIPMENT**

(30) Priority: 29.04.2011 CN 201110110733
(71) Applicant: Huawei Device Co., Ltd., Shenzhen, Guangdong 518129 (CN)
(72) Inventor: ZHAO, Junjie, Shenzhen Guangdong 518129 (CN); WU, Huangwei, Shenzhen Guangdong 518129 (CN)
(74) Representative: Maiwald Patentanwalts GmbH
(86) International application number: PCT/CN2012/074428
(87) International publication number: WO 2012/146149

(57) **Abstract**

Embodiments of the present invention provide an event reporting method and a customer premises equipment. The method includes: A CPE interacts with an ACS to establish a CWMP session between the CPE and the ACS; the CPE encapsulates parameter information of an event in a SOAP message in a process of the CWMP session when the CPE learns that the event occurs; and the CPE sends the SOAP message to the ACS in the process of the CWMP session. In the embodiments of the present invention, timeliness of event reporting is improved. By adopting the event reporting method and the CPE provided in the embodiments of the present invention, a CPE may send an occurring event to an ACS in a process of a current CWMP session, so that the CPE can immediately report an event to the ACS after the event occurs, thereby improving the timeliness of event reporting.

## Description

This application claims priority to Chinese Patent Application No. 201110110733.7, filed with the Chinese Patent Office on April 29, 2011 and entitled "EVENT REPORTING METHOD AND CUSTOMER PREMISES EQUIPMENT", which is incorporated herein by reference in its entirety.

### TECHNICAL FIELD

The embodiments of the present invention relate to the field of communications technologies, and in particular, to an event reporting method and a customer premises equipment.

### BACKGROUND

As a broadband access technology, a digital subscriber line (Digital Subscriber Line, DSL for short) has been widely applied. One or more customer premises equipments (Customer Premises Equipment, CPE for short) are connected to an auto-configuration server (Auto-configuration Server, ACS for short) by using a digital subscriber line access multiplexer (Digital Subscriber Line Access Multiplexer, DSLAM for short), a regional broadband network, a broadband remote access server (Broad Remote Access Server, BRAS for short), and the like. The ACS is connected to a service configuration manager through a northbound interface of the ACS. The ACS is responsible for configuration management of the CPE. An interface between the ACS and the CPE is called a southbound interface. In a process of a current CPE wide area network management protocol (CPE WAN Management Protocol, CWMP for short) session, when an event occurs, a CPE may send parameter information of the event to an ACS in a process of another newly created CWMP session, so that the ACS performs management on the CPE according to the parameter information of the event.

In the prior art, in a process of a CWMP session, when an event occurs, a CPE needs to wait until the current session ends so as to send parameter information of the event to an ACS through an Inform request in a next CWMP session. Therefore, the CPE is incapable of immediately sending the parameter information of the event to the ACS, thereby decreasing timeliness of event reporting.

### SUMMARY

Embodiments of the present invention provide an event reporting method and customer premises equipment, so as to improve timeliness of event reporting.

An embodiment of the present invention provides an event reporting method, including:
interacting, by a CPE, with an ACS to establish a CWMP session between the CPE and the ACS;
encapsulating, by the CPE, parameter information of an event in a SOAP message in a process of the CWMP session when the CPE learns that the event occurs; and
sending, by the CPE, the SOAP message to the ACS in the process of the CWMP session.

An embodiment of the present invention further provides a CPE, including:
an establishing module, configured to interact with an ACS to establish a CWMP session between the CPE and the ACS;
an encapsulating module, configured to encapsulate parameter information of an event in a SOAP message in a process of the CWMP session when it is learned that the event occurs;
a reporting module, configured to send the SOAP message to the ACS in the process of the CWMP session; and a processing module, configured to send the parameter information of the event to the ACS through the SOAP message in the process of the CWMP session when the event occurs.

It can be known from the foregoing technical solutions that, in the embodiments of the present invention, a CPE interacts with an ACS to establish a CWMP session between the CPE and the ACS. In a process of the CWMP session, when it is learned that an event occurs, the CPE encapsulates parameter information of the event in a SOAP message, so that the CPE can send the SOAP message to the ACS in the session process of the CWMP session, thereby improving timeliness of event reporting. By adopting the event reporting method and the CPE provided in the embodiments of the present invention, a CPE may send an occurring event to an ACS in a session process of a current CWMP session, so that the CPE can immediately report an event to the ACS after the event occurs, thereby improving the timeliness of event reporting.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of an event reporting method according to a first embodiment of the present invention;
FIG. 2 is a schematic flowchart of an event reporting method according to a second embodiment of the present invention;
FIG. 3 is a schematic flowchart of an event reporting method according to a third embodiment of the present invention;
FIG. 4 is a schematic flowchart of an event reporting method according to a fourth embodiment of the present invention;
FIG. 5 is a schematic flowchart of an event reporting method according to a fifth embodiment of the present invention;
FIG. 6 is a schematic flowchart of an event reporting method according to a sixth embodiment of the present invention; and
FIG. 7 is a schematic structural diagram of a customer premises equipment according to a seventh embodiment of the present invention.

### DESCRIPTION OF EMBODIMENTS

To make the objectives, the technical solutions, and the advantages of the embodiments of the present invention more clearly, the following clearly and completely describes the technical solutions in the embodiments of the present invention with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

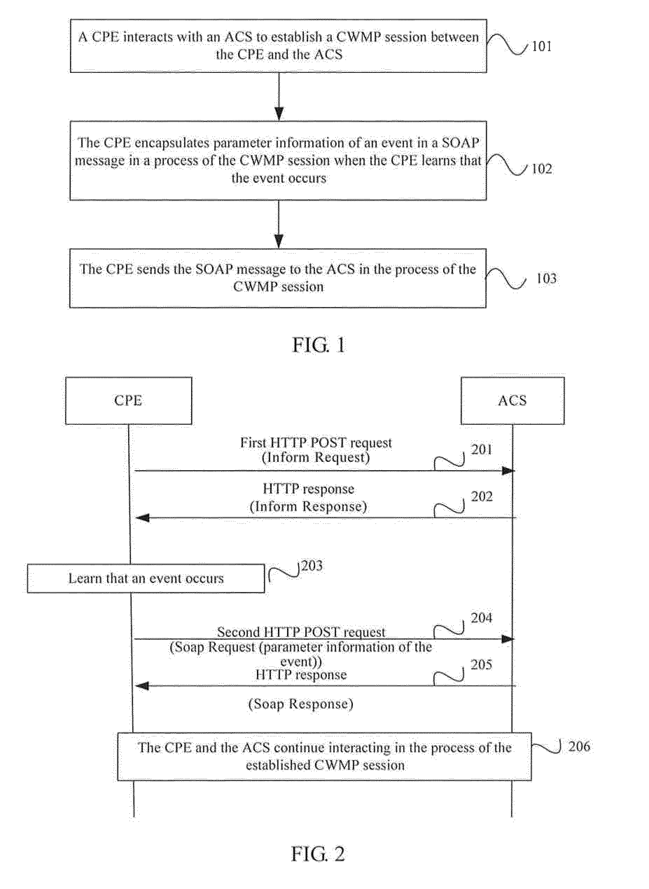

FIG. 1 is a schematic flowchart of an event reporting method according to a first embodiment of the present invention. As shown in FIG. 1, the event reporting method in this embodiment may include the following steps:
Step 101: A CPE interacts with an ACS to establish a CWMP session between the CPE and the ACS.
Step 102: The CPE encapsulates parameter information of an event in a simple object access protocol (Simple Object Access Protocol, SOAP for short) message in a process of the CWMP session when the CPE learns that the event occurs.

The event may include, but is not limited to, a parameter value change event, a diagnosis complete event, or a boot (Boot) event. Parameter information of an event is used for identifying the event.

Specifically, a CPE may specifically encapsulate parameter information of an event in a header or a message body of a SOAP message (a SOAP request or a SOAP response). The CPE may choose on its own to notify an ACS of the event through the header of the SOAP message or the message body of the SOAP message; and/or the ACS specifies, by setting a CPE data model, that the CPE notifies the ACS of the event through the header of the SOAP message or the message body of the SOAP message.

Step 103: The CPE sends the SOAP message to the ACS in the process of the CWMP session.

In this embodiment, an event may occur in any session phase among the following session phases in the process of the established CWMP session; and accordingly, when a CPE learns that an event occurs, the CPE may send parameter information of the event to an ACS through a SOAP message in the process of the CWMP session.

In some cases, before the CPE sends a remote procedure call (Remote Procedure Call, RPC for short) request or an empty message to the ACS, the CPE learns that an event occurs. Accordingly, the CPE may immediately send parameter information of the event to the ACS through a SOAP message in the process of the CWMP session. For example: the CPE immediately encapsulates the parameter information of the event in the SOAP message, and sends the message to the ACS.

In some cases, after the CPE sends an RPC request to the ACS and before the CPE receives a corresponding RPC response sent by the ACS, the CPE learns that an event occurs. Accordingly, the CPE may immediately send parameter information of the event to the ACS through a SOAP message in the process of the CWMP session after receiving the corresponding RPC response sent by the ACS. For example: after receiving the corresponding RPC response sent by the ACS, the CPE immediately encapsulates the parameter information of the event in the SOAP message, and sends the message to the ACS.

In some cases, after the CPE sends an empty message to the ACS and before the CPE receives an empty message or an RPC request sent by the ACS, the CPE learns that an event occurs. Accordingly, the CPE may immediately send parameter information of the event to the ACS through a SOAP message in the process of the CWMP session after receiving the empty message or the RPC request sent by the ACS. For example: after receiving the empty message or the RPC request sent by the ACS, the CPE immediately encapsulates the parameter information of the event in the SOAP message, and sends the message to the ACS.

In some cases, after the CPE receives an RPC request sent by the ACS and before the CPE sends a corresponding RPC response to the ACS, the CPE learns that an event occurs. Accordingly, the CPE stops performing the RPC request or stops sending the corresponding RPC response to the ACS, and may immediately send parameter information of the event to the ACS through a SOAP message in the process of the CWMP session. For example: the CPE stops performing the RPC request or stops sending the corresponding RPC response to the ACS, immediately encapsulates the parameter information of the event in the SOAP message, and sends the message to the ACS.

In some cases, after the CPE completely performs an RPC request sent by the ACS and before the CPE sends a corresponding RPC response to the ACS, the CPE learns that an event occurs. Accordingly, the CPE may immediately send parameter information of the event to the ACS through a SOAP message in the process of the CWMP session. For example: the CPE immediately encapsulates the parameter information of the event in the SOAP message, and sends the message to the ACS. For another example: the CPE immediately encapsulates the parameter information of the event and the corresponding RPC response in the SOAP message, and specifically, the CPE may encapsulate the parameter information of the event in a SOAP header field of the SOAP message and encapsulate the corresponding RPC response in a SOAP body field at the same time.

Further, in step 102, when an event occurs, only if an attribute of the event is an emergency notification, the CPE encapsulates parameter information of the event in a SOAP message.

For example: for a parameter value change event, the ACS may set, by using a SetParameterAttributes (SetParameterAttributes) method, an emergency notification attribute of the parameter value change event, and specifically, may perform setting by expanding a value of a notification (Notification) field in a current SetParameterAttributesStruct (SetParameterAttributesStruct) parameter. For example: when the parameter value is 3, it indicates an emergency notification attribute. Further, when a value of a parameter corresponding to a parameter value change event whose emergency notification attribute is set changes, the name and the value of the parameter may be carried through a ParameterValueStruct (ParameterValueStruct) parameter so as to form an EventList (EventList) array, and an example that the EventList is included in a message body of a SOAP message may be as follows:
<SOAP-ENV:Body>
<EventList SOAP-ENC:arrayType="cwmp:ParameterValueStruct[2]">
<ParameterValueStruct>
<Name>Event1</Name>
<Value xsi:type="xsd:string"> Value1</Value>
</ParameterValueStruct>
<ParameterValueStruct>
<Name>Event2</Name>
<Value xsi:type="xsd:string">Value2</Value>
</ParameterValueStruct>
</EventList >
</SOAP-ENV:Body>

In this embodiment, a CPE interacts with an ACS to establish a CWMP session between the CPE and the ACS. In a process of the CWMP session, when it is learned that an event occurs, the CPE encapsulates parameter information of the event in a SOAP message, so that the CPE can send the SOAP message to the ACS in the session process of the CWMP session, thereby improving timeliness of event reporting. By adopting the event reporting method and the CPE provided in the embodiment of the present invention, a CPE may send an occurring event to an ACS in a session process of a current CWMP session, so that the CPE can immediately report an event to the ACS after the event occurs, thereby improving the timeliness of event reporting.

In order to make the method provided in the embodiment of the present invention clearer, the following takes that a CPE sends parameter information of an event to an ACS through a SOAP request as an example. FIG. 2 is a schematic flowchart of an event reporting method according to a second embodiment of the present invention. This embodiment is a specific embodiment of the first embodiment of the present invention. As shown in FIG. 2, the event reporting method in this embodiment may include the following steps:
Step 201: A CPE sends a first hyper text transfer protocol (Hyper Text Transfer Protocol, HTTP for short) POST request to an ACS, where the first HTTP POST request includes an inform request (Inform Request).
Step 202: The ACS returns an HTTP response corresponding to the first HTTP POST to the CPE, where the HTTP response includes an inform response (Inform Response).

Until now, through interaction between the CPE and the ACS, a CWMP session between the CPE and the ACS is established.

After this step, the CPE may send another HTTP POST request (the HTTP POST request includes an RPC request) or an empty message of an HTTP POST request to the ACS.

Step 203: The CPE learns that an event occurs.

Step 204: The CPE immediately sends a second HTTP POST request to the ACS in a process of the established CWMP session, where the second HTTP POST request includes a SOAP request (SOAP Request) and the SOAP request carries parameter information of the event.

Step 205: Based on the event, the ACS performs corresponding processing, and returns an HTTP response to the CPE, where the HTTP response includes a SOAP response (SOAP Response) corresponding to the SOAP request.

Step 206: The CPE and the ACS continue interacting in the process of the established CWMP session.

For example: the CPE may send another HTTP POST request (the HTTP POST request includes an RPC request) or an empty message of an HTTP POST request to the ACS. Accordingly, the ACS may send an HTTP response (the HTTP response includes an RPC response corresponding to the RPC request), an HTTP response (the HTTP response includes another RPC request), or an empty message of an HTTP response to the CPE.

In this embodiment, if it is learned, before the CPE sends an RPC request or an empty message to the ACS, that an event occurs, the CPE may immediately send parameter information of the event to the ACS through a SOAP message in the process of the CWMP session, thereby improving timeliness of event reporting.

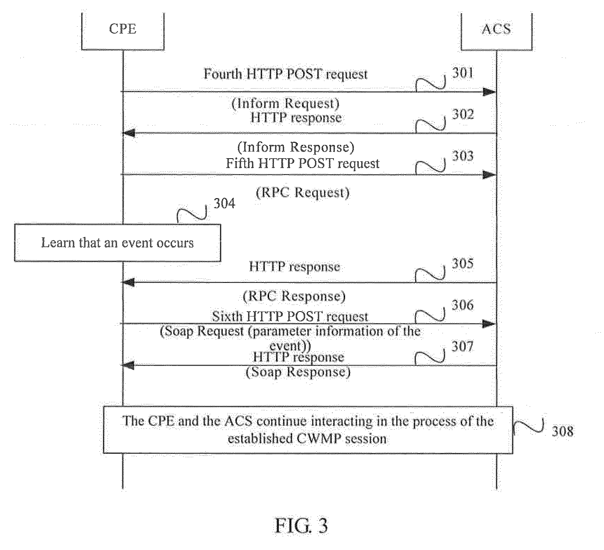

FIG. 3 is a schematic flowchart of an event reporting method according to a third embodiment of the present invention. This embodiment is a specific embodiment of the first embodiment of the present invention. As shown in FIG. 3, the event reporting method in this embodiment may include the following steps:
Step 301: A CPE sends a fourth hyper text transfer protocol (Hyper Text Transfer Protocol, HTTP for short) POST request to an ACS, where the fourth HTTP POST request includes an inform request (Inform Request).
Step 302: The ACS returns an HTTP response corresponding to the fourth HTTP request to the CPE, where the HTTP response includes an inform response (Inform Response) corresponding to the inform request.

Until now, through interaction between the CPE and the ACS, a CWMP session between the CPE and the ACS is established.

Step 303: The CPE sends a fifth HTTP POST request to the ACS, where the fifth HTTP POST request includes an RPC request.

Step 304: The CPE learns that an event occurs.

Step 305: The ACS returns an HTTP response corresponding to the fifth HTTP request to the CPE, where the HTTP response includes an RPC response corresponding to the RPC request.

Step 306: The CPE immediately sends a sixth HTTP POST request to the ACS in a process of the established CWMP session, where the sixth HTTP POST request includes a SOAP request (SOAP Request) and the SOAP request carries parameter information of the event.

Step 307: Based on the event, the ACS performs corresponding processing, and returns an HTTP response corresponding to the sixth HTTP request to the CPE, where the HTTP response includes a SOAP response (SOAP Response) corresponding to the SOAP request.

Step 308: The CPE and the ACS continue interacting in the process of the established CWMP session.

In this embodiment, if it is learned, after the CPE sends an RPC request to the ACS, that an event occurs, the CPE may immediately send parameter information of the event to the ACS through a SOAP message in the process of the CWMP session after receiving an RPC response sent by the ACS, thereby improving timeliness of event reporting.

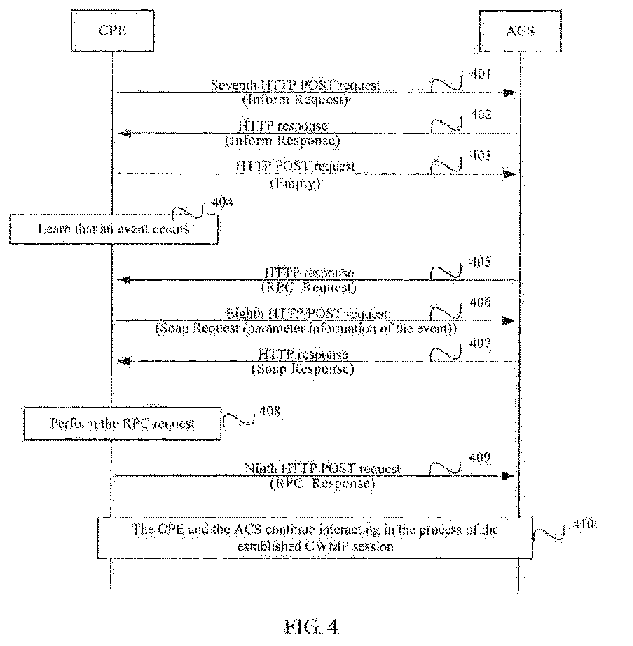

FIG. 4 is a schematic flowchart of an event reporting method according to a fourth embodiment of the present invention. This embodiment is a specific embodiment of the first embodiment of the present invention. As shown in FIG. 4, the event reporting method in this embodiment may include the following steps:
Step 401: A CPE sends a seventh hyper text transfer protocol (Hyper Text Transfer Protocol, HTTP for short) POST request to an ACS, where the seventh HTTP POST request includes an inform request (Inform Request).
Step 402: The ACS returns an HTTP response corresponding to the seventh HTTP request to the CPE, where the HTTP response includes an inform response (Inform Response) corresponding to the inform request.

Until now, through interaction between the CPE and the ACS, a CWMP session between the CPE and the ACS is established.

Step 403: The CPE sends an empty message (Empty) of an HTTP POST request to the ACS.

Step 404: The CPE learns that an event occurs.

Step 405: The ACS returns an HTTP response corresponding to the empty message of the HTTP POST request to the CPE, where the HTTP response includes an RPC request.

Step 406: The CPE immediately sends an eighth HTTP POST request to the ACS in a process of the established CWMP session, where the eighth HTTP POST request includes a SOAP request (SOAP Request) and the SOAP request carries parameter information of the event.

Step 407: Based on the event, the ACS performs corresponding processing, and returns an HTTP response corresponding to the eighth HTTP request to the CPE, where the HTTP response includes a SOAP response (SOAP Response).

Step 408: The CPE performs the RPC request.

Step 409: The CPE sends a ninth HTTP POST request to the ACS, where the ninth HTTP POST request includes an RPC response corresponding to the RPC request.

Step 410: The CPE and the ACS continue interacting in the process of the established CWMP session.

In some cases, in step 405, the HTTP response returned by the ACS to the CPE may be an empty message of the HTTP response. Accordingly, the CPE may not perform step 408 and step 409, and directly perform step 410.

In this embodiment, if it is learned, after the CPE sends an empty message to the ACS and before the CPE receives an empty message or an RPC request sent by the ACS, that an event occurs, the CPE may immediately send parameter information of the event to the ACS through a SOAP message in the process of the CWMP session after receiving the empty message or the RPC request sent by the ACS, thereby improving timeliness of event reporting.

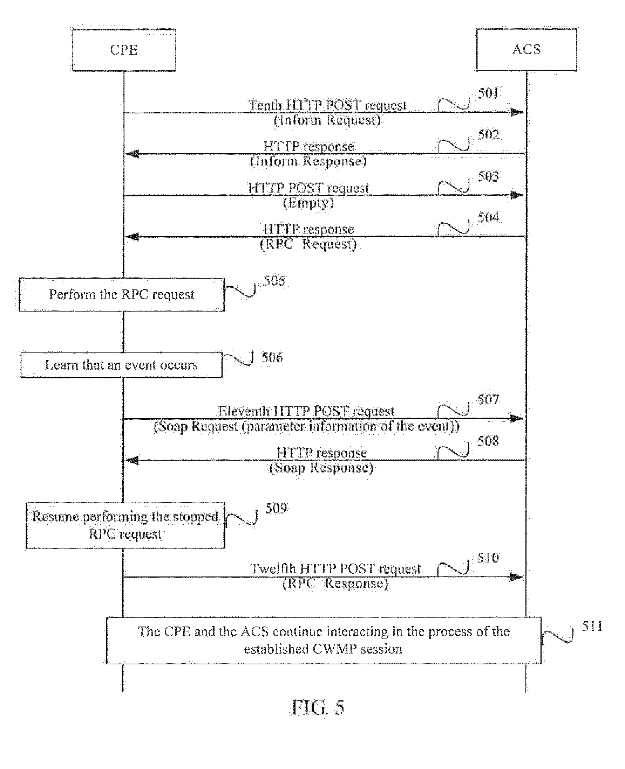

FIG. 5 is a schematic flowchart of an event reporting method according to a fifth embodiment of the present invention. This embodiment is a specific embodiment of the first embodiment of the present invention. As shown in FIG. 5, the event reporting method in this embodiment may include the following steps:
Step 501: A CPE sends a tenth hyper text transfer protocol (Hyper Text Transfer Protocol, HTTP for short) POST request to an ACS, where the tenth HTTP POST request includes an inform request (Inform Request).
Step 502: The ACS returns an HTTP response corresponding to the tenth HTTP request to the CPE, where the HTTP response includes an inform response (Inform Response).

Until now, through interaction between the CPE and the ACS, a CWMP session between the CPE and the ACS is established.

Step 503: The CPE sends an empty message (Empty) of an HTTP POST request to the ACS.

Step 504: The ACS returns an HTTP response corresponding to the empty message of the HTTP POST request to the CPE, where the HTTP response includes an RPC request.

Step 505: The CPE performs the RPC request.

Step 506: The CPE learns that an event occurs.

Step 507: The CPE stops performing the RPC request, and immediately sends an eleventh HTTP POST request to the ACS in a process of the established CWMP session, where the eleventh HTTP POST request includes a SOAP request (SOAP Request) and the SOAP request carries parameter information of the event.

Step 508: Based on the event, the ACS performs corresponding processing, and returns an HTTP response corresponding to the eleventh HTTP request to the CPE, where the HTTP response includes a SOAP response (SOAP Response).

Step 509: The CPE resumes performing the stopped RPC request.

Step 510: The CPE returns a twelfth HTTP POST request to the ACS, where the twelfth HTTP POST request includes an RPC response corresponding to the RPC request.

Step 511: The CPE and the ACS continue interacting in the process of the established CWMP session.

In this embodiment, if it is learned, after the CPE receives an RPC request sent by the ACS and before the CPE sends an RPC response to the ACS, that an event occurs, the CPE stops performing the RPC request or stops sending the RPC response to the ACS, and may immediately send parameter information of the event to the ACS through a SOAP message in the process of the CWMP session, thereby improving timeliness of event reporting.

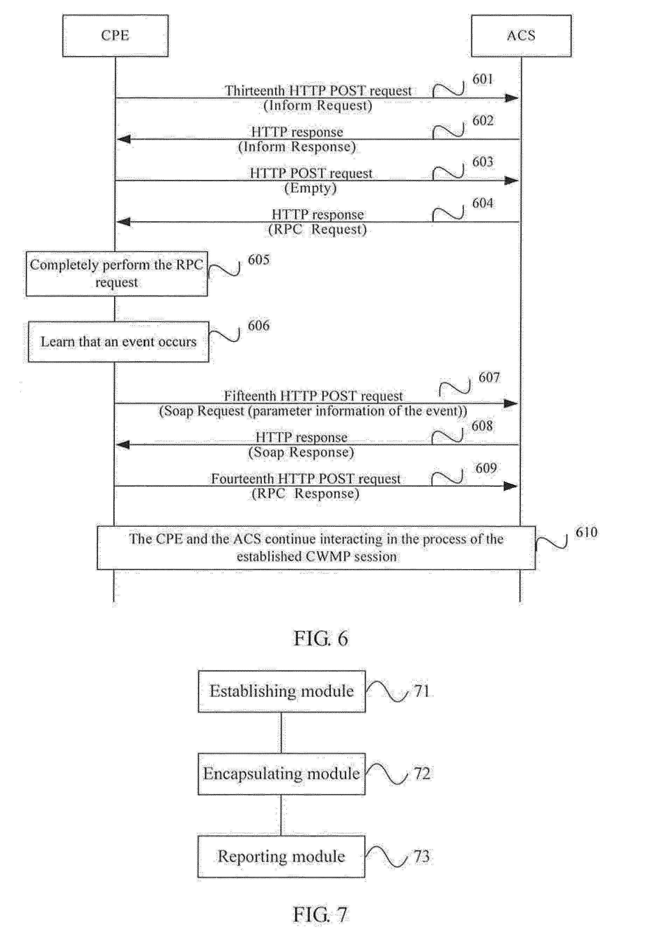

FIG. 6 is a schematic flowchart of an event reporting method according to a sixth embodiment of the present invention. This embodiment is a specific embodiment of the first embodiment of the present invention. As shown in FIG. 6, the event reporting method in this embodiment may include the following steps:
Step 601: A CPE sends a thirteenth hyper text transfer protocol (Hyper Text Transfer Protocol, HTTP for short) POST request to an ACS, where the thirteenth HTTP POST request includes an inform request (Inform Request).
Step 602: The ACS returns an HTTP response corresponding to the thirteenth HTTP request to the CPE, where the HTTP response includes an inform response (Inform Response).

Until now, through interaction between the CPE and the ACS, a CWMP session between the CPE and the ACS is established.

Step 603: The CPE sends an empty message (Empty) of an HTTP POST request to the ACS.

Step 604: The ACS returns an HTTP response corresponding to the empty message of the HTTP POST request to the CPE, where the HTTP response includes an RPC request.

Step 605: The CPE completely performs the RPC request.

Step 606: The CPE learns that an event occurs.

Step 607: The CPE stops returning a fourteenth HTTP POST request that includes an RPC response corresponding to the RPC request to the ACS, and immediately sends a fifteenth HTTP POST request to the ACS in the established CWMP session, where the fifteenth HTTP POST request includes a SOAP request (SOAP Request) and the SOAP request carries parameter information of the event.

Step 608: Based on the event, the ACS performs corresponding processing, and returns an HTTP response corresponding to the fifteenth HTTP request to the CPE, where the HTTP response includes a SOAP response (SOAP Response).

Step 609: The CPE resumes returning the stopped fourteenth HTTP POST request, where the fourteenth HTTP POST request includes an RPC response.

Step 610: The CPE and the ACS continue interacting in the process of the established CWMP session.

In some cases, in step 607, the CPE may also immediately send an HTTP POST request that includes a SOAP request (SOAP Request) to the ACS in the process of the established CWMP session without stopping returning the fourteenth HTTP POST request that includes an RPC response to the ACS, where the SOAP request carries parameter information of the event and the RPC response.

In this embodiment, if it is learned, after the CPE completely performs an RPC request sent by the ACS and before the CPE sends an RPC response to the ACS, that an event occurs, the CPE may immediately send parameter information of the event and the RPC response to the ACS through a SOAP message in the process of the CWMP session, thereby improving timeliness of event reporting.

It should be noted that, for brevity of description, the foregoing method embodiments are represented as a series of actions. However, persons skilled in the art should understand that the present invention is not limited to the order of the described actions, because according to the present invention, some steps may adopt other order or occur simultaneously. Persons skilled in the art should also understand that the embodiments described in the specification are all exemplary embodiments, and the involved actions and modules are not necessarily required in the present invention.

In the foregoing embodiments, the description of each embodiment has its own focus. For a part that is not described in detail in a certain embodiment, reference may be made to a related description in another embodiment.

FIG. 7 is a schematic structural diagram of a customer premises equipment according to a seventh embodiment of the present invention. As shown in FIG. 7, the customer premises equipment in this embodiment may include an establishing module 71, an encapsulating module 72, and a reporting module 73. The establishing module 71 is configured to interact with an ACS to establish a CWMP session between the CPE and the ACS; the encapsulating module 72 is configured to encapsulate parameter information of an event in a SOAP message in a process of the CWMP session when it is learned that the event occurs; and the reporting module 73 is configured to send the SOAP message encapsulated by the encapsulating module 72 to the ACS in the process of the CWMP session.

Functions of the CPE in the first embodiment to the sixth embodiment may all be implemented by the customer premises equipment provided in this embodiment of the present invention.

Specifically, the encapsulating module 72 in this embodiment may specifically encapsulate parameter information of an event in a SOAP message in the process of the CWMP session when it is learned that the event occurs and if an attribute of the event is an emergency notification.

Specifically, the encapsulating module 72 may specifically encapsulate parameter information of an event in a header or a message body of a SOAP message in the CWMP session when it is learned that the event occurs.

In some cases, the encapsulating module 72 may also learn, before the CPE sends an RPC request or an empty message to the ACS, that an event occurs. Accordingly, when it is learned, before the CPE sends an RPC request or an empty message to the ACS, that an event occurs, the encapsulating module 72 may specifically and immediately encapsulate parameter information of the event in a SOAP message in the process of the CWMP session.

In some cases, the encapsulating module 72 may also learn, after the CPE sends an RPC request to the ACS and before the CPE receives a corresponding RPC response sent by the ACS, that an event occurs. Accordingly, when it is learned, after the CPE sends an RPC request to the ACS and before the CPE receives a corresponding RPC response sent by the ACS, that an event occurs, the encapsulating module 72 may specifically and immediately encapsulate parameter information of the event in a SOAP message in the process of the CWMP session after the CPE receives the corresponding RPC response sent by the ACS.

In some cases, the encapsulating module 72 may also learn, after the CPE sends an empty message to the ACS and before the CPE receives an empty message or an RPC request sent by the ACS, that an event occurs. Accordingly, when it is learned, after the CPE sends an empty message to the ACS and before the CPE receives an empty message or an RPC request sent by the ACS, the encapsulating module 72 may specifically and immediately encapsulate parameter information of the event in a SOAP message in the process of the CWMP session after the CPE receives the empty message or the RPC request sent by the ACS.

In some cases, the encapsulating module 72 may also learn, after the CPE receives an RPC request sent by the ACS and before the CPE sends a corresponding RPC response to the ACS, that an event occurs. Accordingly, when it is learned, after the CPE receives an RPC request sent by the ACS and before the CPE sends a corresponding RPC response to the ACS, the encapsulating module 72 may specifically stop the CPE from performing the RPC request or stop the CPE from sending the corresponding RPC response to the ACS, and immediately encapsulate parameter information of the event in a SOAP message in the process of the CWMP session.

In some cases, the encapsulating module 72 may also learn, after the CPE completely performs an RPC request sent by the ACS and before the CPE sends a corresponding RPC response to the ACS, that an event occurs. Accordingly, the encapsulating module 72, specifically, when it is learned, after the CPE completely performs an RPC request sent by the ACS and before the CPE sends a corresponding RPC response to the ACS, that the event occurs, the CPE immediately encapsulates parameter information of the event in a SOAP message in the process of the CWMP session; or the CPE may also immediately encapsulate parameter information of an event and the corresponding RPC response in a SOAP message in the process of the CWMP session when it is learned that the event occurs.

In this embodiment, a CPE interacts with an ACS through an establishing module to establish a CWMP session between the CPE and the ACS. In a process of the CWMP session, when it is learned that an event occurs, the encapsulating module encapsulates parameter information of the event in a SOAP message, so that a reporting module can send the SOAP message to the ACS in the session process of the CWMP session, thereby improving timeliness of event reporting. By adopting the event reporting method and the CPE provided in the embodiment of the present invention, a CPE may send an occurring event to an ACS in a session process of a current CWMP session, so that the CPE can immediately report an event to the ACS after the event occurs, thereby improving the timeliness of event reporting.

Persons of ordinary skill in the art may understand that, all or part of the steps of the foregoing method embodiments may be implemented by a program instructing relevant hardware. The program may be stored in a computer readable storage medium. When the program is run, the steps included in the foregoing method embodiments are performed. The storage medium may be any medium capable of storing program codes, such as a ROM, a RAM, a magnetic disk, or an optical disk.

Finally, it should be noted that the foregoing embodiments are only intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features of the technical solutions, as long as these modifications or replacements do not make the essence of corresponding technical solutions depart from the spirit and scope of the technical solutions in the embodiments of the present invention.

## Claims

1. An event reporting method, comprising:
interacting, by a customer premises equipment CPE, with an auto-configuration server ACS to establish a CPE wide area network management protocol CWMP session between the CPE and the ACS;
encapsulating, by the CPE, parameter information of an event in a simple object access protocol SOAP message in a process of the CWMP session when the CPE learns that the event occurs; and
sending, by the CPE, the SOAP message to the ACS in the process of the CWMP session.

2. The method according to claim 1, wherein the encapsulating, by the CPE, parameter information of an event in a simple object access protocol SOAP message in a process of the CWMP session when the CPE learns that the event occurs comprises:
encapsulating, by the CPE, the parameter information of the event in the SOAP message in the process of the CWMP session when the CPE learns that the event occurs and if an attribute of the event is an emergency notification.

3. The method according to claim 1 or claim 2, wherein the encapsulating, by the CPE, parameter information of an event in a SOAP message comprises:
encapsulating, by the CPE, the parameter information of the event in a header or a message body of the SOAP message.

4. The method according to any one of claim 1 to claim 3, wherein the encapsulating, by the CPE, parameter information of an event in a SOAP message in a process of the CWMP session when the CPE learns that the event occurs comprises:
learning, in the process of the CWMP session, before the CPE sends a remote procedure call RPC request or an empty message to the ACS, that the event occurs; and
immediately encapsulating, by the CPE, the parameter information of the event in the SOAP message.

5. The method according to any one of claim 1 to claim 3, wherein the encapsulating, by the CPE, parameter information of an event in a SOAP message in a process of the CWMP session when the CPE learns that the event occurs comprises:
learning, in the process of the CWMP session, after the CPE sends an RPC request to the ACS and before the CPE receives a corresponding RPC response sent by the ACS, that the event occurs; and
immediately encapsulating, by the CPE, the parameter information of the event in the SOAP message after receiving the corresponding RPC response sent by the ACS.

6. The method according to any one of claim 1 to claim 3, wherein the encapsulating, by the CPE, parameter information of an event in a SOAP message in a process of the CWMP session when the CPE learns that the event occurs comprises:
learning, in the process of the CWMP session, after the CPE sends an empty message to the ACS and before the CPE receives an empty message or an RPC request sent by the ACS, that the event occurs; and
immediately encapsulating, by the CPE, the parameter information of the event in the SOAP message after receiving the empty message or the RPC request sent by the ACS.

7. The method according to any one of claim 1 to claim 3, wherein the encapsulating, by the CPE, parameter information of an event in a SOAP message in a process of the CWMP session when the CPE learns that the event occurs comprises:
learning, in the process of the CWMP session, after the CPE receives an RPC request sent by the ACS and before the CPE sends a corresponding RPC response to the ACS, that the event occurs; and
stopping, by the CPE, performing the RPC request, or stopping sending the corresponding RPC response to the ACS, and immediately encapsulating the parameter information of the event in the SOAP message.

8. The method according to any one of claim 1 to claim 3, wherein the encapsulating, by the CPE, parameter information of an event in a SOAP message in a process of the CWMP session when the CPE learns that the event occurs comprises:
learning, in the process of the CWMP session, after the CPE completely performs an RPC request sent by the ACS and before the CPE sends a corresponding RPC response to the ACS, that the event occurs; and
immediately encapsulating, by the CPE, the parameter information of the event in the SOAP message; or
immediately encapsulating, by the CPE, the parameter information of the event and the corresponding RPC response in the SOAP message.

9. A customer premises equipment CPE, comprising:
an establishing module, configured to interact with an auto-configuration server ACS to establish a CPE wide area network management protocol CWMP session between the CPE and the ACS;
an encapsulating module, configured to encapsulate parameter information of an event in a SOAP message in a process of the CWMP session when it is learned that the event occurs; and
a reporting module, configured to send the SOAP message to the ACS in the process of the CWMP session.

10. The CPE according to claim 9, wherein the encapsulating module is specifically configured to:
encapsulate the parameter information of the event in the simple object access protocol SOAP message in the process of the CWMP session when it is learned that the event occurs and if an attribute of the event is an emergency notification.

11. The CPE according to claim 9 or claim 10, wherein the encapsulating module is specifically configured to:
encapsulate the parameter information of the event in a header or a message body of the SOAP message in the process of the CWMP session when it is learned that the event occurs.

12. The CPE according to any one of claim 9 to claim 11, wherein the encapsulating module is specifically configured to:
immediately encapsulate the parameter information of the event in the SOAP message in the process of the CWMP session when it is learned, before the CPE sends a remote procedure call RPC request or an empty message to the ACS, that the event occurs.

13. The CPE according to any one of claim 9 to claim 11, wherein the encapsulating module is specifically configured to:
immediately encapsulate the parameter information of the event in the SOAP message in the process of the CWMP session after the CPE receives a corresponding RPC response sent by the ACS, when it is learned, after the CPE sends an RPC request to the ACS and before the CPE receives the corresponding RPC response sent by the ACS, that the event occurs.

14. The CPE according to any one of claim 9 to claim 11, wherein the encapsulating module is specifically configured to:
immediately encapsulate the parameter information of the event in the SOAP message in the process of the CWMP session after the CPE receives an empty message or an RPC request sent by the ACS, when it is learned, after the CPE sends an empty message to the ACS and before the CPE receives the empty message or the RPC request sent by the ACS, that the event occurs.

15. The CPE according to any one of claim 9 to claim 11, wherein the encapsulating module is specifically configured to:
stop the CPE from performing an RPC request or stop the CPE from sending a corresponding RPC response to the ACS, and immediately encapsulate the parameter information of the event in the SOAP message in the process of the CWMP session, when it is learned, after the CPE receives the RPC request sent by the ACS and before the CPE sends the corresponding RPC response to the ACS, that the event occurs.

16. The CPE according to any one of claim 9 to claim 11, wherein the encapsulating module is specifically configured to:
the CPE immediately encapsulates the parameter information of the event in the SOAP message in the process of the CWMP session, when it is learned, after the CPE performs an RPC request sent by the ACS and before the CPE sends a corresponding RPC response to the ACS, that the event occurs; or
the CPE immediately encapsulates the parameter information of the event and the corresponding RPC response in the SOAP message in the process of the CWMP session when it is learned that the event occurs.
